# EUROPÄISCHE PATENTSCHRIFT

(11) **EP 1 530 595 B1**
(45) Veröffentlichungstag und Bekanntmachung des Hinweises auf die Patenterteilung: **05.10.2005**
(21) Anmeldenummer: 03766207.9
(22) Anmeldetag: 17.07.2003
(51) Int. Cl.: C08F 8/12, C08F 8/28

(54) **SILAN-HALTIGE POLYVINYLALKOHOLE UND POLYVINYLACETALE**
POLYVINYL ALCOHOLS AND POLYVINYL ACETALS CONTAINING SILANE
POLYVINYLALCOOLS CONTENANT DU SILANE ET POLYVINYLACETALS

(30) Priorität: 25.07.2002 DE 10233934
(43) Veröffentlichungstag der Anmeldung: 18.05.2005
(73) Patentinhaber: Wacker Polymer Systems GmbH & Co. KG, 84489 Burghausen (DE)
(72) Erfinder: BACHER, Andreas, 84489 Burghausen (DE); STARK, Kurt, 84508 Burgkirchen (DE); KORNEK, Thomas, 84489 Burghausen (DE)
(74) Vertreter: Schuderer, Michael
(86) Internationale Anmeldenummer: PCT/EP2003/007789
(87) Internationale Veröffentlichungsnummer: WO 2004/013190

(56) Entgegenhaltungen:
- EP-A- 0 322 175
- EP-A- 0 656 370
- DE-A- 4 402 408
- DE-A- 10 140 129
- DE-A- 19 807 504
- FR-A- 2 105 981
- US-A- 3 160 614
- US-A- 4 097 436
- US-A- 4 544 724

## Beschreibung

Die Erfindung betrifft Silan-haltige Polyvinylalkohole und Polyvinylacetale, Verfahren zu deren Herstellung, sowie deren Verwendung.

Aus dem Stand der Technik sind eine Reihe von Verfahren zur Herstellung von silanhaltigen Polymeren bekannt. Die Herstellung kann beispielsweise mittels polymeranaloger Umsetzung von funktionellen Polymeren mit Silylierungsmitteln erfolgen. In der US-A 5,036,137 wird beispielsweise die Herstellung von silyliertem Polyvinylalkohol beschrieben, wobei Polyvinylalkohol mit 3-Glycidoxypropyltrimethoxysilan oder Vinyltrimethoxysilan umgesetzt wird. Aus der EP-A 581576 ist bekannt, OH-funktionelle Polymere wie Polyvinylalkohol mit Alkylorthosilikaten oder Alkyltrialkoxysilanen umzusetzen.

Silanhaltige Polymere können auch mittels Copolymerisation von silanfunktionellen, ethylenisch ungesättigten Monomeren hergestellt werden. Die EP-A 123927 betrifft silylmodifizierte Polyvinylalkohole, welche unter anderem durch Copolymerisation von Vinylester mit silylfunktionellen Comonomeren und anschließender Hydrolyse zugänglich werden.

Ein weiterer Weg ist die Einführung von Silangruppen in das Polymer durch Terminieren der Polymerkette mit Si-Gruppen enthaltenden Thioverbindungen, beispielsweise Mercaptosilanen, wie dies in der US-A 6346570 beschrieben wird; oder Terminierung mittels Michael-Addition von funktionellen Silanen wie aus der US-A 6221994 bekannt. Aus der WO-A 01/09249 ist bekannt, silanfunktionelle Copolymere mittels Copolymerisation mit Vinylsilan und Terminieren der Polymerkette mit Mercaptosilan herzustellen. Nachteilig bei der Terminierung von Polymerketten mit Mercaptosilanen ist deren Toxizität und deren Tendenz zur Anlagerung an Doppelbindungen. Weiterhin haben diese Mercaptosilane eine zu starke Tendenz, das Molekulargewicht zu regeln, was sich in einer zu starken Herabsetzung des Molekulargewichts äußert. Ferner wird häufig die Reaktionsgeschwindigkeit bei der Polymerisation vermindert. Weitere Nachteile beim Einsatz von Mercaptosilanen sind deren Tendenz zur Gelbfärbung sowie deren unangenehmer Geruch.

Silan-modifizierte Polyvinylacetale sind aus vier japanischen Veröffentlichungen bekannt. Aus der JP-A 06-247760 und der JP-A 06-248247 sind mit Silan-funktionellen Monomereinheiten modifizierte Polyvinylacetale bekannt, welche als Bindemittel für zementäre Massen oder für anorganische Fasermaterialien eingesetzt werden. Diese Si-modifizierten Polyvinylacetale werden durch Copolymerisation von Vinylacetat mit Vinylalkoxysilanen, anschließender Verseifung des Vinylester-Vinylsilan-Copolymeren und schließlich Acetalisierung mit Aldehyd erhalten. Die JP-A 10-237259 betrifft eine Mischung aus Silan-modifiziertem Polyvinylacetal mit unmodifiziertem Polyvinylacetal zur Beschichtung von Materialien zum Bedrucken mit Tintenstrahldruckern, wobei Vinylester-Vinylsilan-Mischpolymerisate zunächst verseift und anschließend mit unmodifiziertem Polyvinylalkohol vermischt werden, um mit Aldehyd acetalisiert zu werden. Aus der JP-A 62-181305 ist schließlich ein mit Triethoxyisocyanatopropyl-Silan modifiziertes Polyvinylbutyral bekannt. Die Alkoxysilangruppe wird dabei über eine Urethanbindung (durch Reaktion der Isocyanatgruppe des Silans und freien Hydroxylgruppen am Polyvinylbutyral) durch polymeranaloge Reaktion an das Polymergerüst angeknüpft.

Aus der DE-A 10140129 ist bekannt, teilverseifte oder vollverseifte Vinylesterpolymerisate mit silanhaltigen Aldehyden zu acetalisieren.

Gegenstand der Erfindung sind Silan-haltige Polyvinylalkohole und Polyvinylacetale, erhältlich mittels
a) radikalischer Polymerisation von einem oder mehreren Vinylestern von unverzweigten oder verzweigten Alkylcarbonsäuren mit 1 bis 18 C-Atomen in Gegenwart von silanhaltigen Aldehyden oder deren Halbacetale oder Vollacetale,
b) Verseifung der damit erhaltenen Vinylesterpolymerisate, und gegebenenfalls
c) Acetalisierung der teilverseiften oder vollverseiften Vinylesterpolymerisate.

Geeignete Vinylester sind Vinylester von unverzweigten oder verzweigten Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 13 C-Atomen, beispielsweise VeoVa9^{R} oder VeoVa10^{R} (Handelsnamen der Firma Shell). Besonders bevorzugt ist Vinylacetat.

Neben den Vinylester-Einheiten können gegebenenfalls noch ein oder mehreren Monomere aus der Gruppe umfassend Methacrylsäureester und Acrylsäureester von Alkoholen mit 1 bis 15 C-Atomen, Olefine, Diene, Vinylaromaten und Vinylhalogenide copolymerisiert sein. Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat. Geeignete Diene sind 1,3-Butadien und Isopren. Beispiele für polymerisierbare Olefine sind Ethen und Propen. Als Vinylaromaten können Styrol und Vinyltoluol einpolymerisiert werden. Aus der Gruppe der Vinylhalogenide werden üblicherweise Vinylchlorid, Vinylidenchlorid oder Vinylfluorid, vorzugsweise Vinylchlorid, eingesetzt. Der Anteil dieser Comonomere wird so bemessen, dass der Anteil an Vinylestermonomer ≥ 50 Mol-% im Vinylester-Polymerisat beträgt.

Gegebenenfalls können noch weitere Comonomere in einem Anteil von vorzugsweise 0.02 bis 20 Gew.-%, bezogen auf das Gesamtgewicht des Vinylester-Polymerisats enthalten sein. Beispiele hierfür sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise N-Vinylformamid, Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propan-sulfonsäure. Weitere Beispiele sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Geeignete silanhaltige Aldehyde oder deren Halb- bzw. Vollacetale können durch folgende Strukturformeln I bis VI angegeben werden:
I) R₃Si-[OSiR₂]_{y}-(CH₂)ₓ-CH=O (Aldehyd),
II) R₃Si- [OSiR₂]_{y}-(CH₂)ₓ-CH(OR¹)₂ (Halb-/Vollacetal),
III) R₃Si-[OSiR₂]_{y}-(CH₂)z-Ar-(CH₂)z-CH=O (Aldehyd),
IV) R₃Si-[OSiR₂]_{y}-(CH₂)z-Ar- (CH₂)z-CH (OR¹)₂ (Halb-/Vollacetal),
V) O=CH- (CH₂)ₓ-Si(R)₂-O-Si(R)₂-(CH₂)ₓ-CH=O (Aldehyd-Dimere),
VI) [SiO(R) - (CH₂)_{z}-CH=O]₃₋₄ (cyclische Tri- und Tetramere),
wobei R gleich oder verschieden ist und für Halogen, vorzugsweise Cl oder Br; für einen unverzweigten oder verzweigten, gesättigten oder ungesättigten, gegebenenfalls substituierten Alkyl- oder Alkoxyrest mit 1 bis 12 C-Atomen, vorzugsweise mit 1 bis 3 C-Atomen; für einen Acylrest mit 2 bis 12 C-Atomen,
wobei R gegebenenfalls durch Heteroatome aus der Gruppe umfassend N, O, S unterbrochen sein kann; für einen, gegebenenfalls substituierten, Aryl- oder Aryloxyrest mit 3 bis 20 C-Atomen,
wobei der Aromat auch ein oder mehrere Heteroatome aus der Gruppe umfassend N, O, S enthalten kann, steht. Bevorzugt kann ein Rest R hydrolysiert werden, um eine freie Silanolgruppe Si-OH zu bilden.

R¹ hat die Bedeutung unverzweigter oder verzweigter, gesättigter oder ungesättigter, gegebenenfalls substituierter Alkylrest mit 1 bis 12 C-Atomen, vorzugsweise 1 bis 3 C-Atome, der gegebenenfalls durch Heteroatome aus der Gruppe umfassend N, O, S unterbrochen sein kann. R¹ kann aber auch für H stehen,
wobei ein Halbacetal vorliegt, wenn ein Rest R¹ für H steht, oder ein Aldehyd-Hydrat, wenn beide Reste R¹ für H stehen. Ar steht für eine aromatische Gruppe, vorzugsweise Phenylen, wobei hierzu auch Aromaten gezählt werden, welche ein oder mehrere Heteroatome aus der Gruppe umfassend N, O, S enthalten. Diese Aromaten können auch unterschiedlich substituiert sein.

x steht für eine Zahl von 2 bis 40, vorzugsweise 2 bis 10. y steht für eine Zahl von 0 bis 100, bevorzugt für eine Zahl von 0 bis 10. z für eine Zahl zwischen 0 und 20, bevorzugt 0 bis 5.

Die silanhaltigen Aldehyde werden in einer Menge von 0.0001 bis 5.0 Gew.-%, bevorzugt 0.01 bis 4.0 Gew.-%, besonders bevorzugt 0.1 bis 3.0 Gew.-%, jeweils bezogen auf das Gesamtgewicht der Monomere eingesetzt.

Bevorzugte silanhaltige Aldehyde oder deren Halb- bzw. Vollacetale sind die der Strukturformeln I und II, insbesondere diejenigen Aldehyd-Derivate, die durch Hydrosilylierung von Acrolein bzw. dessen Halb- oder Vollacetal erhalten werden können, beispielsweise 3,3-Diethoxypropyltriethoxysilan, 3,3-Dimethoxypropyltriethoxysilan, 3,3-Diethoxypropyltrimethoxysilan, 3,3-Dimethoxypropyltrimethoxysilan, 3,3-Diethoxypropylmethyldiethoxysilan, 3,3-Dimethoxypropyldiisopropoxymethylsilan, 3,3-Diethoxypropyldimethylethoxysilan, 3,3-Dimethoxypropyldiisopropoxymethylsilan, 3,3-Dimethoxypropyltripropoxysilan, 3,3-Dimethoxypropyltriisopropoxysilan, 3,3-Dipropoxypropyltriethoxysilan, 3,3-Diethoxypropylmethyldimethoxysilan, 3,3-Diethoxypropyldimethylmethoxysilan, 3,3-Dimethoxypropylmethyldimethoxysilan, 3,3-Dimethoxypropyldimethylmethoxysilan, 3,3-Dimethoxypropylmethyldiethoxysilan, 3-(Trimethoxysilyl)-propionaldehyd, 3-(Triethoxysilyl)-propionaldehyd, 3-Trimethylsilyl-propionaldehyd, 3-(Methyldiethoxy)silyl-propionaldehyd. Bevorzugt ist auch der 4-(Trimethoxysilyl)-butyraldehyd sowie 1,1'-Diethylformyl-tetramethyldisiloxan (Dimer nach V). Die freien Aldehydgruppen werden bei den Halb- und Vollacetalen durch Hydrolyse im wässrigen Medium freigesetzt.

Zur Erhöhung des Silanisierungsgrades können zusätzlich noch ethylenisch ungesättigte, silanhaltige Monomere copolymerisiert werden. Geeignete ethylenisch ungesättigte, silanhaltige Monomere sind beispielsweise ethylenisch ungesättigte Siliciumverbindungen der allgemeinen Formel R²SiR³₀₋₂(OR⁴)₁₋₃, wobei R² die Bedeutung CH₂=CR⁵-(CH₂)₀₋₁ oder CH₂=CR⁵CO₂(CH₂)₁₋₃ hat, R³ die Bedeutung C₁- bis C₃-Alkylrest, C₁- bis C₃-Alkoxyrest oder Halogen, vorzugsweise Cl oder Br hat, R⁴ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R⁴ gegebenenfalls durch eine Ethergruppe unterbrochen sein kann, und R⁵ für H oder CH₃ steht. Die ethylenisch ungesättigten, silanhaltigen Monomere werden vorzugsweise in einer Menge von 0.01 bis 10.0 Gew.-%, besonders bevorzugt 0.01 bis 1.0 Gew.-%, jeweils bezogen auf das Gesamtgewicht der Comonomeren, copolymerisiert.

Bevorzugte ethylenisch ungesättigte, silanhaltige Monomere sind γ-Acryl- bzw. γ-Methacryloxypropyltri(alkoxy)silane, a-Methacryloxymethyltri(alkoxy)silane, γ-Methacryloxypropylmethyldi(alkoxy)silane; Vinylsilane wie Vinylalkyldi(alkoxy)-silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele für bevorzugte silanhaltige Monomere sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)-silan, Vinyltrichorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Vinylsilane.

Als Silane werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische.

Geeignete ethylenisch ungesättigte, silanhaltige Monomere sind auch Silan-Gruppen enthaltene (Meth)acrylamide, der allgemeinen Formel CH₂= CR⁶-CO-NR⁷-R⁸-SiR⁹ₙ-(R¹⁰)₃₋ₘ , wobei n= 0 bis 4, m= 0 bis 2, R⁶ entweder H oder eine Methyl-Gruppe ist, R⁷ H ist oder eine Alkyl-Gruppe mit 1 bis 5 C-Atomen ist; R⁸ eine Alkylen-Gruppe mit 1 bis 5 C-Atomen oder eine bivalente organische Gruppe in welcher die Kohlenstoffkette durch ein O- oder N-Atom unterbrochen wird, ist, R⁹ eine Alkyl-Gruppe mit 1 bis 5 C-Atomen ist, R¹⁰ eine Alkoxy-Gruppe mit 1 bis 40 C-Atomen ist, welche mit weiteren Heterocyclen substituiert sein können. In Monomeren, in denen 2 oder mehrere R⁶ oder R¹⁰- Gruppen vorkommen, können diese identisch oder unterschiedlich sein. Die (Meth)acrylamido-alkylsilane werden auch vorzugsweise in einer Menge von 0.01 bis 10.0 Gew.-%, besonders bevorzugt 0.01 bis 1.0 Gew.-%, jeweils bezogen auf das Gesamtgewicht der Comonomeren, copolymerisiert.

Beispiele für solche (Meth)acrylamido-alkylsilane sind: 3-(Meth)acrylamido-propyltrimethoxysilan, 3-(Meth)acrylamidopropyltriethoxysilan, 3-(Meth)acrylamido-propyltri(β-methoxyethoxy) silan, 2-(Meth)acrylamido-2-methylpropyltrimethoxysilan, 2-(Meth)acrylamido-2-methylethyltrimethoxysilan, N-(2-(Meth)acrylamido-ethyl)aminopropyltrimethoxysilan, 3-(Meth)acrylamido-propyltriacetoxysilan, 2-(Meth)acrylamidoethyltrimethoxysilan, 1-(Meth)acrylamido-methyltrimethoxysilan, 3-(Meth)acrylamido-propylmethyldimethoxysilan, 3-(Meth)acrylamido-propyldimethylmethoxysilan, 3-(N-Methyl-(Meth)acrylamido)-propyltrimethoxysilan, 3-((Meth)acrylamidomethoxy) -3-hydroxypropyltrimethoxysilan, 3- ((Meth)acrylamidomethoxy)-propyltrimethoxysilan, N,N-Dimethyl-N-trimethoxysilylpropyl-3-(Meth)acrylamido-propylammoniumchlorid und N-N-Dimethyl-N-trimethoxysilylpropyl-2-(Meth)acrylamido-2-methylpropylammoniumchlorid.

Die Vinylester-Polymerisate können in bekannter Weise mittels Polymerisation hergestellt werden; vorzugsweise durch Substanzpolymerisation, Suspensionspolymerisation oder durch Polymerisation in organischen Lösungsmitteln, besonders bevorzugt in alkoholischer Lösung. Geeignete Lösungsmittel und Regler sind beispielsweise Methanol, Ethanol, Propanol, Isopropanol. Die Polymerisation wird unter Rückfluß bei einer Temperatur von 50°C bis 100°C durchgeführt und durch Zugabe gängiger Initiatoren radikalisch initiiert. Beispiele für gängige Initiatoren sind Percarbonate wie Cyclohexylperoxidicarbonat oder Perester wie t-Butylperneodecanoat oder t-Butylperpivalat.

Die Einstellung des Molekulargewichts kann in bekannter Weise durch den Lösungsmittelgehalt, durch Variation der Initiatorkonzentration, durch Variation der Temperatur, vor allem aber durch Zugabe und Variation der Menge des silanhaltigen Aldehyds erfolgen. Die Monomere können insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert.werden. Die als Regler verwendeten silanhaltigen Aldehyde oder deren Halb- bzw. Vollacetale können insgesamt vorgelegt werden, insgesamt zudosiert werden oder in Anteilen vorgelegt werden und der Rest zudosiert werden. Vorzugsweise wird ein Teil vorgelegt und der Rest zudosiert. Besonders bevorzugt werden Regler und Monomere so zugegeben, dass deren molares Verhältnis gleich bleibt. Mit dieser Maßnahme erhält man eine homogene Molekulargewichtsverteilung.

Neben den als Regler verwendeten silanhaltigen Aldehyde können auch zusätzlich weitere Regler auf Basis von silanhaltigen Verbindungen oder von Aldehyden eingesetzt werden.

Die Verseifung der silanisierten-Vinylester-Polymerisate zu silanhaltigen Polyvinylalkoholen erfolgt in an sich bekannter Weise, zum Beispiel nach dem Band- oder Kneterverfahren, im Alkalischen oder Sauren unter Zugabe von Säure oder Base. Vorzugsweise wird das silanisierte Polyvinylester-Festharz in Alkohol, beispielweise Methanol, unter Einstellen eines Feststoffgehalts von 15 bis 70 Gew.-% aufgenommen. Bevorzugt wird die Hydrolyse im Basischen durchgeführt, beispielsweise durch Zugabe von NaOH, KOH oder NaOCH₃. Die Base wird im allgemeinen in einer Menge von 1 bis 5 Mol-% pro Mol Ester-Einheiten eingesetzt. Die Hydrolyse wird bei Temperaturen von 30°C bis 70°C durchgeführt. Nach Abschluß der Hydrolyse wird das Lösungsmittel abdestilliert und der Polyvinylalkohol wird als Pulver erhalten. Der silanhaltige Polyvinylalkohol kann aber auch durch eine sukzessive Zugabe von Wasser, während das Lösungsmittel abdestilliert wird, als wäßrige Lösung gewonnen werden.

Die teil- oder vollverseiften, silanisierten Vinylesterpolymerisate haben vorzugsweise einen Hydrolysegrad von 50 Mol-% bis 99.99 Mol-%, besonders bevorzugt von 70 Mol-% bis 99 Mol-%, am meisten bevorzugt von ≥ 96 Mol-%. Als vollverseift bezeichnet man dabei solche Polymerisate, deren Hydrolysegrad ≥ 96 Mol-% ist. Als teilverseifte Polyvinylalkohole sind solche zu verstehen, mit einem Hydrolysegrad ≥ 50 Mol-% und < 96 Mol-%.
Die Viskosität des Polyvinylalkohols (DIN 53015, Methode nach Höppler; 4 %-ige Lösung in Wasser) beträgt 1 bis 60 mPas, vorzugsweise 1 bis 6 mPas, und dient als Maß für das Molekulargewicht und für den Polymerisationsgrad der teil- oder vollverseiften, silanisierten Polyvinylalkohole.

Zur Acetalisierung werden die teil- oder vollverseiften silan-haltigen Polyvinylester vorzugsweise in wässrigem Medium aufgenommen. Üblicherweise wird ein Festgehalt der wässrigen Lösung von 5 bis 30 Gew.-% eingestellt. Die Acetalisierung erfolgt in Gegenwart von sauren Katalysatoren wie Salzsäure, Schwefelsäure, Salpetersäure oder Phosphorsäure. Vorzugsweise wird durch Zugabe von 20 %-iger Salzsäure der pH-Wert der Lösung auf Werte < 1 eingestellt. Nach Zugabe des Katalysators wird die Lösung auf vorzugsweise -10°C bis +60°C temperiert. Dabei gilt: Je niedriger das Molekulargewicht des eingesetzten Silan-modifizierten Polyvinylalkohols, umso geringer wird die Fälltemperatur gewählt. Die Acetalisierungsreaktion wird durch Zugabe des/der Aldehyds(e) gestartet.

Zur Acetalisierung werden die teil- oder vollverseiften Vinylesterpolymerisate mit aliphatischen oder aromatischen Aldehyden, mit vorzugsweise 1 bis 15 C-Atomen, umgesetzt, welche gegebenenfalls mit einem oder mehreren Substituenten aus der Gruppe umfassend Hydroxy-, Carboxyl- und Sulfonat-, Ammonium-, Aldehyd-Rest substituiert sein können. Gegebenenfalls können die Aldehyde auch in maskierter Form, beispielsweise als Halb- oder Vollacetal, oder mit Schutzgruppe eingesetzt werden. Bevorzugte Aldehyde aus der Gruppe der aliphatischen Aldehyde mit 1 bis 15 C-Atomen sind Formaldehyd, Acetaldehyd, Propionaldehyd und am meisten bevorzugt Butyraldehyd oder eine Mischung aus Butyr- und Acetaldehyd. Als aromatische Aldehyde können beispielsweise Benzaldehyd oder dessen Derivate verwendet werden.

Die Zugabemenge an Aldehyd richtet sich dabei nach dem erwünschten Acetalisierungsgrad. Da die Acetalisierung mit fast vollständigem Umsatz abläuft, kann die Zugabemenge durch einfache stöchicmetrische Rechnung bestimmt werden. Die Acetalisierung wird nach Abschluß der Zugabe des Aldehyds durch Erwärmen des Ansatzes auf 20°C bis 70°C und mehrstündiges Rühren, vorzugsweise 1 bis 6 Stunden vervollständigt, und das pulverförmige Reaktionsprodukt durch Filtration und nachgeschaltetem Waschschritt isoliert. Zur Stabilisierung können ferner Alkalien, wie z.B. NaOH oder KOH, zugesetzt werden. Während der Fällung und der Nachbehandlung kann mit Emulgatoren gearbeitet werden, um die wässrige Suspension des silanhaltigen Polyvinylacetals zu stabilisieren.

Polyvinylacetale mit hohem Acetalisierungsgrad (> 40 Mol-%) fallen im Zuge der Acetalisierung im wässrigem Medium aus. Polyvinylacetale mit niedrigem Acetalisierungsgrad (≤ 20 Mol-%), die bedeutend wasserlöslicher sind, können durch Eintropfen in Fällungslösungsmittel als Feststoff gefällt werden. Als Fällungslösungsmittel sind Alkohole, wie z.B. Methanol oder Ethanol geeignet. Niedrig acetalisierte Polyvinylacetale können aber auch durch Sprühtrocknung aus der wässrigen Lösung als Feststoff erhalten werden, wobei sich noch ein Mahlschritt anschließen kann. Die wässrige Lösung mit dem niedrig acetalisierten silanhaltigen Polyvinylacetal kann auch nach der Neutralisation als solche für die entsprechenden Anwendungen weiterverwendet werden.

Zur Stabilisierung der wässrigen Suspension des Silan-modifizierten Polyvinylacetals können anionische, zwitterionische, kationische und nichtionische Emulgatoren sowie Schutzkolloide verwendet werden. Bevorzugt werden zwitterionische oder anionische Emulgatoren eingesetzt, gegebenenfalls auch in Mischungen. Als nichtionische Emulgatoren werden bevorzugt Kondensationsprodukte von Ethylenoxid oder Propylenoxid mit linearen oder verzweigten Alkoholen mit 8 bis 18 Kohlenstoffatomen, Alkylphenolen oder linearen oder verzweigten Carbonsäuren von 8 bis 18 Kohlenstoffatomen eingesetzt, sowie Blockcopolymere von Ethylenoxid und Propylenoxid eingesetzt. Geeignete anionische Emulgatoren sind beispielsweise Alkylsulfate, Alkylsulfonate, Alkylarylsulfate, sowie Sulfate oder Phosphate von Kondensationsprodukten des Ethylenoxides mit linearen oder verzweigten Alkylalkoholen und mit 2 bis 25 EO-Einheiten, Alkylphenolen, und Mono- oder Diester der Sulfobernsteinsäure. Geeignete zwitterionische Emulgatoren sind beispielsweise Alkyldimethylaminoxide, wobei die Alkylkette 6 bis 16 C-Atome besitzt. Als kationische Emulgatoren können z.B. Tetraalkylammoniumhalogenide, wie C₆-C₁₆-Alkyltrimethylammoniumbromid verwendet werden. Ebenso können Trialkylamine mit einem längeren (≥ 5 C-Atome) und zwei kürzeren Kohlenwasserstoffresten (< 5 C-Atome) eingesetzt werden, die im Zuge der Acetalisierung, die unter stark sauren Bedingungen abläuft, in protonierter Form vorliegen und als Emulgator wirken können. Die Emulgatormenge beträgt 0.01 bis 20 Gew.-%, bezogen auf das Gesamtgewicht des silanmodifizierten Polyvinylacetals in der Mutterlauge. Bevorzugt ist eine Menge von 0.01 bis 2 Gew.-% an Emulgator, besonders bevorzugt ist eine Menge von 0.01 bis 1 Gew.-% Emulgator bezogen auf das silanmodifizierte Polyvinylacetal.

Die Silan-modifizierten Polyvinylacetale besitzen einen Acetalisierungsgrad von 1 bis 80 Mol-%, vorzugsweise 1 bis 20 Mol-% und 45 bis 80 Mol-%. Die Viskosität der Silan-modifizierten Polyvinylacetale (DIN 53015; Methode nach Höppler, 10 %-ige Lösung in Ethanol) beträgt mindestens 4 mPas bis 1200 mPas, vorzugsweise 4 bis 160 mPas. Der Polymerisationsgrad beträgt mindestens 130. Die ethanolischen Lösungen des Silanmodifizierten Polyvinylacetals können durch gezielte Vernetzung freier Silanolgruppen (mit Vernetzungskatalysatoren, die dem Fachmann bekannt sind) in einen - je nach Silangehalt mehr oder weniger ausgeprägten - Gelzustand (mit einer Viskosität deutlich größer als 1200 mPas) überführt werden.

Die Silan-haltigen Polyvinylalkohole bzw. Polyvinylacetale eignen sich zur Verwendung in den für diese Polymerklassen typischen Anwendungsgebieten. Die Silan-haltigen Polyvinylacetale eignen sich als Bindemittel für Druckfarben, und in Form deren Folien für Verbundsicherheitsglas und Glasverbunde, Hochsicherheitsglas oder Scheibenfolien. Wasserlösliche, Silan-haltige Polyvinylacetale eignen sich als Schutzkolloid, beispielsweise für wässrige Dispersionen und bei der Polymerisation in wässrigem Medium, und bei der Herstellung von in Wasser redispergierbaren Dispersionspulvern. Die Silanhaltigen Polyvinylacetale können ferner in Lacken auf wässriger Basis, in Pulverlacken, als Bindemittel in Korrosionsschutzmitteln, als Bindemittel in der Keramikindustrie, als Bindemittel für Keramikpulver und Metallpulver im Spritzguß (powder injection molding) und als Bindemittel für die Innenbeschichtung von Dosen eingesetzt werden.

Die Silan-haltigen Polyvinylakohole eignen sich als Schutzkolloide bei der Polymerisation, als Bindemittel für Papierstreichmassen, sowie als Bindemittel für Baustoffe, Keramik und Holz.

Die nachfolgenden Beispiele dienen zur weiteren Erläuterung der Erfindung, ohne diese in irgendeiner Weise einzuschränken:

### Herstellung der silanhaltigen Polyvinylester-Festharze:

### Beispiel 1:

In einem 2-Liter Rührkessel mit Rückflußkühler, Dosiereinrichtungen, thermostatierbarem Mantel und einem Ankerrührer wurden 427.27 g Methanol, 77.12 g Vinylacetat (VAc), 647.84 mg (2.63 mMol) 1,1'-Di(ethylformyl)-tetramethyldisiloxan und 347.76 mg PPV (t-Butylperpivalat - 75 %-ig in Aliphaten; Halbwertszeit = 1 h bei 74°C) vorgelegt. Der Kessel wurde auf 60°C aufgeheizt. Bei Erreichen von leichtem Rückfluß startete die Initiatordosierung (4.99 g PPV und 46.74 g Methanol). Die erste Stunde wurde die Initiatordosierung mit 6 ml/h dosiert. Nach 1 Stunde Anpolymerisation startete anschließend die Monomerdosierung (390.3 g VAc und 3.28 g (13.32 mMol) 1,1'-Di(ethylformyl)-tetramethyldisiloxan) über eine Zeit von 240 Minuten (Rate: 106 ml/h). Gleichzeitig wurde die Initiatordosierung auf 12 ml/h erhöht. Die Initiatordosierung lief mit dieser Rate 240 Minuten und endete mit der Monomerdosierung. Nach der Initiatordosierung lief der Ansatz noch 120 Minuten auf Temperatur. Nach dieser Nachreaktionszeit wurde der Kessel aufgeheizt zur Destillation, dabei wurde 6 h lang alle 30 Minuten frisches Methanol in den Kessel gegeben, das der abdestillierten Menge entsprach (Entmonomerisierung).

### Festharzanalysen:

Festgehalt (FG): 48.27 % (methanolische Lösung); reines Festharz: Viskosität (Höppler 10 %-ig in Ethylacetat) 2.33 mPas; Säurezahl SZ (Methanol) 8.98 mg KOH/g; Mw (aus GPC, Elutionsmittel THF; Polystyrol-Standards): 31000 g/mol; Mn: 12200 g/mol; Dispersität Mw/Mn: 2.54; Silizium-Gehalt: 0.119 % (alkalischer Aufschluß); Si-Gehalt aus 1 H-NMR: 0.126 %

### Beispiel 2:

Wie Beispiel 1 mit dem Unterschied, dass statt 1,1'-Di-(ethylformyl)-tetramethyldisiloxan 2.075 g (15.95 mMol) 3-Trimethylsilylpropionaldehyd eingesetzt wurde. Davon wurden in der Vorlage 342.34 mg (2.63 mMol) eingesetzt, in der Monomerdosierung befanden sich 1.733 g (13.32 mMol).

### Festharzanalysen:

Festgehalt (FG): 49.32 % (methanolische Lösung); reines Festharz: Viskosität (Höppler 10 %-ig in Ethylacetat) 2.65 mPas; Säurezahl SZ (Methanol) 5.31 mg KOH/g; Mw (aus GPC, Elutionsmittel THF; Polystyrol-Standards): 38000 g/mol; Mn: 14000 g/mol; Dispersität Mw/Mn: 2.71; Silizium-Gehalt: 0.075 % (alkalischer Aufschluß); Si-Gehalt aus 1H-NMR: 0.084 %.

### Beispiel 3:

Wie Beispiel 1 mit dem Unterschied, dass statt 1,1'-Di(ethylformyl)-tetramethyldisiloxan 3.033 g (15.95 mMol) 3-(Methyl-diethoxy)silyl-propionaldehyd eingesetzt wurde. Davon wurden in der Vorlage 500.0 mg (2.63 mMol) eingesetzt, in der Monomerdosierung befanden sich 2.533 g (13.32 mMol).

### Festharzanalysen:

Festgehalt (FG): 48.92 % (methanolische Lösung); reines Festharz: Viskosität (Höppler 10 %-ig in Ethylacetat) 2.61 mPas; Säurezahl SZ (Methanol) 6.02 mg KOH/g; Mw (aus GPC, Elutionsmittel THF; Polystyrol-Standards): 37500 g/mol; Mn: 13700 g/mol; Dispersität Mw/Mn: 2.74; Silizium-Gehalt: 0.082 % (alkalischer Aufschluß); Si-Gehalt 1H-NMR: 0.087 %.

### Vergleichsbeispiel 4:

Wie Beispiel 1 mit dem Unterschied, dass statt dem silanhaltigen Aldehyd 1,1'-Di(ethylformyl)-tetramethyldisiloxan 3.127 g (15.94 mMol) 3-Mercaptopropyltrimethoxysilan (Wacker GF 70) eingesetzt wurde. Davon wurden in der Vorlage 515.5 mg (2.63 mMol) eingesetzt, in der Monomerdosierung befanden sich 2.612 g (13.31 mMol).

### Festharzanalysen:

Festgehalt (FG): 49.72 % (methanolische Lösung); reines Festharz: Viskosität (Höppler 10 %-ig in Ethylacetat) 2.11 mPas; Säurezahl SZ (Methanol) 10.09 mg KOH/g; Mw (aus GPC, Elutionsmittel THF; Polystyrol-Standards): 26400 g/mol; Mn: 11400 g/mol; Dispersität Mw/Mn: 2.32; Silizium-Gehalt: 0.081 % (alkalischer Aufschluß).

Auswertung: Hier wurde festgestellt, dass die Polymerisation durch die Anwesenheit eines Mercaptogruppenhaltigen Reglers verzögert wird (zeitlicher Umsatz bei der Polymerisation geringer als bei Beispiel 1, 2 und 3). Ferner wurde bei Verwendung des Mercaptosilans eine leichte Gelbfärbung der Lösung im Zuge der Polymerisation beobachtet.

### Beispiel 5:

In einem 2-Liter Rührkessel mit Rückflußkühler, Dosiereinrichtungen, thermostatierbarem Mantel und einem Ankerrührer wurden 426.87 g Methanol, 77.05 g Vinylacetat (VAc), 459.51 mg (1.87 mMol) 1,1'-Di(ethylformyl)-tetramethyldisiloxan, 315.82 mg Vinyltriethoxysilan (97 %-ig) und 347.44 mg PPV (t-Butylperpivalat - 75 %-ig in Aliphaten; Halbwertszeit = 1 h bei 74°C) vorgelegt. Der Kessel wurde auf 60°C aufgeheizt. Bei Erreichen von leichtem Rückfluß startete die Initiatordosierung (4.98 g PPV und 46.70 g Methanol). Die erste Stunde wurde die Initiatordosierung mit 6 ml/h dosiert. Nach 1 Stunde Anpolymerisation startete anschließend die Monomerdosierung (389.93 g VAc, 1.61 g Vinyltriethoxysilan und 2.345 g (9.53 mMol) 1,1'-Di(ethylformyl)-tetramethyldisiloxan) über eine Zeit von 240 Minuten (Rate: 106 ml/h). Gleichzeitig wurde die Initiatordosierung auf 12 ml/h erhöht. Die Initiatordosierung lief mit dieser Rate 240 Minuten und endete mit der Monomerdosierung. Nach der Initiatordosierung lief der Ansatz noch 120 Minuten auf Temperatur. Nach dieser Nachreaktionszeit wurde der Kessel aufgeheizt zur Destillation, dabei wurde 6.h lang alle 30 Minuten frisches Methanol in den Kessel gegeben, das der abdestillierten Menge entsprach (Entmonomerisierung).

### Festharzanalysen:

Festgehalt (FG): 50.70 % (methanolische Lösung); reines Festharz: Viskosität (Höppler 10 %-ig in Ethylacetat) 2.48 mPas; Säurezahl SZ (Methanol) 6.73 mg KOH/g; Mw (aus GPC, Elutionsmittel THF; Polystyrol-Standards): 36500 g/mol; Mn: 15500 g/mol; Dispersität Mw/Mn: 2.35; Silizium-Gehalt: 0.153 % (alkalischer Aufschluß); Si-Gehalt 1H-NMR: 0.162 %.

### Vergleichsbeispiel 6:

Wie Beispiel 5 mit dem Unterschied, dass statt dem silanhaltigen Aldehyd 1,1'-Di(ethylformyl)-tetramethyldisiloxan 2.238 g (11.41 mMol) 3-Mercaptopropyltrimethoxysilan eingesetzt wurde. Davon wurden in der Vorlage 366.39 mg (1.87 mMol) eingesetzt, in der Monomerdosierung befanden sich 1.872 g (9.54 mMol).

### Festharzanalysen:

Festgehalt (FG): 48.7 % (methanolische Lösung); reines Festharz: Viskosität (Höppler 10 %-ig in Ethylacetat): 2.37 mPas; Säurezahl SZ (Methanol) 10.09 mg KOH/g; Mw (aus GPC, Elutionsmittel THF; Polystyrol-Standards): 32700 g/mol; Mn: 13500 g/mol; Dispersität Mw/Mn: 2.42; Silizium-Gehalt: 0.113 % (alkalischer Aufschluß).

### Auswertung:

Vergleichsbeispiel 6 führt zu niedrigerem Molekulargewicht als Beispiel 5. Die Mercaptoverbindung ist ein sehr starker Regler. Der Silanaldehyd zeigt mildere Reglerwirkung, obwohl in der Verbindung 2 freie Aldehydgruppen übertragen.

### Beispiel 7:

In einem 2-Liter Rührkessel mit Rückflußkühler, Dosiereinrichtungen, thermostatierbarem Mantel und einem Ankerrührer wurden 424.61 g Methanol, 72.81 g Vinylacetat (VAc), 766.44 mg VeoVa10, 3.10 g Isopropenylacetat (IPAc, 99 %-ig), 766.44 mg (3.11 mMol) 1,1'-Di(ethylformyl)-tetramethyldisiloxan und 345.59 mg PPV (t-Butylperpivalat - 75 %-ig in Aliphaten; Halbwertszeit = 1 h bei 74°C) vorgelegt. Der Kessel wurde auf 60°C aufgeheizt. Bei Erreichen von leichtem Rückfluß startete die Initiatordosierung (4.95 g PPV und 46.45 g Methanol). Die erste Stunde wurde die Initiatordosierung mit 6 ml/h dosiert. Nach 1 Stunde Anpolymerisation startete anschließend die Monomerdosierung (368.47 g VAc, 3.88 g VeoVa10, 15.67 g IPAc (99 %-ig) und 3.88 g (15.76 mMol) 1,1'-Di(ethylformyl)-tetramethyldisiloxan) über eine Zeit von 240 Minuten (Rate: 106 ml/h). Gleichzeitig wurde die Initiatordosierung auf 12 ml/h erhöht. Die Initiatordosierung lief mit dieser Rate 240 Minuten und endete mit der Monomerdosierung. Nach der Initiatordosierung lief der Ansatz noch 120 Minuten auf Temperatur. Nach dieser Nachreaktionszeit wurde der Kessel aufgeheizt zur Destillation, dabei wurde 6 h lang alle 30 Minuten frisches Methanol in den Kessel gegeben, das der abdestillierten Menge entsprach (Entmonomerisierung).

### Festharzanalysen:

Festgehalt (FG): 47.61 % (methanolische Lösung); reines Festharz: Viskosität (Höppler 10 %-ig in Ethylacetat) 2.26 mPas; Säurezahl SZ (Methanol) 3.93 mg KOH/g; Mw (aus GPC, Elutionsmittel THF; Polystyrol-Standards): 28000 g/mol; Mn: 11500 g/mol; Dispersität Mw/Mn: 2.43; Silizium-Gehalt: 0.155 % (alkalischer Aufschluß); Si-Gehalt aus 1 H-NMR: 0.172 %.

### Vergleichsbeispiel 8:

Wie Beispiel 7 mit dem Unterschied, dass statt dem silanhaltigen Aldehyd 1,1'-Di(ethylformyl)-tetramethyldisiloxan 3.703 g (18.87 mMol) 3-Mercaptopropyltrimethoxysilan eingesetzt wurde. Davon wurden in der Vorlage 611.59 mg (3.12 mMol) eingesetzt, in der Monomerdosierung befanden sich 3.091 g (15.75 mMol).

### Festharzanalysen:

Festgehalt (FG): 44.58 % (methanolische Lösung); reines Festharz: Viskosität (Höppler 10 %-ig in Ethylacetat) 1.98 mPas; Säurezahl SZ (Methanol) 3.37 mg KOH/g; Mw (aus GPC, Elutionsmittel THF; Polystyrol-Standards): 24300 g/mol; Mn: 9800 g/mol; Dispersität Mw/Mn: 2.48; Silizium-Gehalt: 0.102 % (alkalischer Aufschluß).

### Beispiel 9:

In einem 2-Liter Rührkessel mit Rückflußkühler, Dosiereinrichtungen, thermostatierbarem Mantel und einem Ankerrührer wurden 268.78 g Ethylacetat, 121.83 g Vinylacetat (VAc), 1.22 g (4.15 mMol) 3,3-Diethoxypropyltriethoxysilan und 549.33 mg PPV (t-Butylperpivalat - 75 %-ig in Aliphaten; Halbwertszeit = 1 h bei 74°C) vorgelegt. Der Kessel wurde auf 60°C aufgeheizt. Bei Erreichen von leichtem Rückfluß startete die Initiatordosierung (7.88 g PPV und 51.49 g Ethylacetat). Die erste Stunde wurde die Initiatordosierung mit 5 ml/h dosiert. Nach 1 Stunde Anpolymerisation startete anschließend die Monomerdosierung (616.52 g VAc und 6.17 g (20.98 mMol) 3,3-Diethoxypropyltriethoxysilan) über eine Zeit von 240 Minuten (Rate: 167.4 ml/h). Gleichzeitig wurde die Initiatordosierung auf 10.5 ml/h erhöht. Die Initiatordosierung lief mit dieser Rate 300 Minuten und endete 1 h nach der Monomerdosierung. Nach der Initiatordosierung lief der Ansatz noch 120 Minuten auf Temperatur. Nach dieser Nachreaktionszeit wurde der Kessel aufgeheizt zur Destillation, dabei wurde 6 h lang alle 30 Minuten frisches Ethylacetat in den Kessel gegeben, das der abdestillierten Menge entsprach (Entmonomerisierung).

### Festharzanalysen:

Festgehalt (FG): 61.90 % (methanolische Lösung); reines Festharz: Viskosität (Höppler 10 %-ig in Ethylacetat) 11.11 mPas; Säurezahl SZ (Methanol) 5.61 mg KOH/g; Mw (aus GPC, Elutionsmittel THF; Polystyrol-Standards): 188600 g/mol; Mn: 43500 g/mol; Dispersität Mw/Mn: 4.33; Silizium-Gehalt: 0.084 % (alkalischer Aufschluß).

### Vergleichsbeispiel 10:

Wie Beispiel 9 mit dem Unterschied, dass statt dem Vollacetal des silanhaltigen Aldehyds 3,3-Diethoxypropyltriethoxysilan 4.943 g (25.19 mMol) 3-Mercaptopropyltrimethoxysilan eingesetzt wurde. Davon wurden in der Vorlage 814.57 mg (4.15 mMol) eingesetzt, in der Monomerdosierung befanden sich 4.128 g (21.04 mMol).

### Festharzanalysen:

Festgehalt (FG): 62.02 % (methanolische Lösung); reines Festharz: Viskosität (Höppler 10 %-ig in Ethylacetat) 4.42 mPas; Säurezahl SZ (Methanol) 5.05 mg KOH/g; Mw (aus GPC, Elutionsmittel THF; Polystyrol-Standards) : 69000 g/mol; Mn: 26500 g/mol; Dispersität Mw/Mn: 2.60; Silizium-Gehalt: 0.076 % (alkalischer Aufschluß).

Die Zusammenfassung der Ansätze zur Herstellung der silanhaltigen Polyvinylester-Festharze zeigt Tabelle 1.

**Tabelle 1**

| Bsp. | Reglertyp, (Menge mMol) | Übertragung (%)¹⁾ | Mw | Mn | Dispersität | Si-Gehalt (%)²⁾ |
|---|---|---|---|---|---|---|
| 1 | V (15.95) | 70 | 31000 | 12200 | 2.54 | 0.119 |
| 2 | I (15.95) | 94 | 38000 | 14000 | 2.71 | 0.075 |
| 3 | I (15.95) | 96 | 37500 | 13700 | 2.74 | 0.082 |
| V4 | SH-Silan (15.95) | 100 | 26400 | 11400 | 2.32 | 0.081 |
| 5 | V (11.40) | 86 | 36500 | 15500 | 2.35 | 0.153 |
| V6 | SH-Silan (11.41) | 100 | 32700 | 13500 | 2.42 | 0.113 |
| 7 | V(18.87) | 91 | 28000 | 11500 | 2.43 | 0.155 |
| V8 | SH-Silan(18.87) | 100 | 24300 | 9800 | 2.48 | 0.102 |
| 9 | II (25.13) | 20 | 188600 | 43500 | 4.33 | 0.084 |
| V10 | SH-Silan( 25.19) | 100 | 69000 | 26500 | 2.60 | 0.076 |

| | | | | | | |
|---|---|---|---|---|---|---|
| 1) Die Übertragung des Reglers wurde mit Hilfe der 1H-NMR-Spektroskopie ermittelt. | | | | | | |
| 2) Der Silizium-Gehalt wurde durch alkalischen Aufschluß ermittelt. | | | | | | |

### Herstellung der silanhaltigen Polyvinylalkohole:

### Beispiel 11 (Verseifung des Harzes aus Beispiel 9):

In einem 2 Liter Rührkessel (drucklos), mit Rückflußkühler, Dosiereinrichtungen und einem Paddelrührer, wurden 437.7 g einer 61.9 %-igen Polymerlösung des silanhaltigen Polyvinylacetat-Festharzes aus Beispiel 9 in Methanol vorgelegt und auf einen Festgehalt von 20 % mit Methanol verdünnt. Diese Lösung wurde dann auf 55°C aufgeheizt. Anschließend wurden 5.1 ml 45 %-ige methanolische Natronlauge schnell zugegeben. Nach dem Gelpunkt wurde die methanolische Suspension 2h bei 55°C gerührt. Um das gefällte PVA als wässrige Lösung zu erhalten, wurde die Suspension aufgeheizt zum Destillieren und das Destillat wurde durch Wasser ersetzt. Dieser Vorgang wurde solange wiederholt, bis das gesamte Methanol durch Wasser ersetzt wurde.

Analog nach diesem Verfahren wurden die silanhaltigen Polyvinylester-Festharze aus den Beispielen 1, 2, 3, 5, 7 und 9 sowie aus den Vergleichsbeispielen 4, 6, 8 und 10 verseift.

Die Analysen der wässrigen Polyvinylalkohol-Lösungen sind in Tabelle 2 aufgeführt.

**Tabelle 2**

| Bsp. | Harz aus Bsp. | FG (%) | SZ mg(KOH)/g | pH | VZ mg (KOH) /g | Viskosität in mPas | Si-Gehalt in %^{*)} |
|---|---|---|---|---|---|---|---|
| 11 | 9 | 16.3 | 0 | 6.6 | 10.7 | 6.33 | 0.162 |
| V12 | V10 | 16.1 | 0 | 6.8 | 10.5 | 5.28 | 0.151 |
| 13 | 1 | 17.0 | 0.1 | 7.3 | 8.3 | 2.68 | 0.238 |
| V14 | V4 | 18.1 | 0.1 | 7.1 | 6.4 | 2.26 | 0.158 |
| 15 | 5 | 14.0 | 0 | 7.2 | 7.6 | 2.73 | 0.296 |
| V16 | V6 | 12.0 | 0 | 7.0 | 8.3 | 2.57 | 0.220 |
| 17 | 7 | 14.9 | 0 | 7.8 | 8.5 | 2.37 | 0.305 |
| V18 | V8 | 14.4 | 0 | 7.0 | 10.0 | 2.21 | 0.199 |
| 19 | 2 | 15.3 | 0.1 | 7.1 | 11.2 | 2.51 | 0.149 |
| 20 | 3 | 17.2 | 0 | 7.4 | 9.4 | 2.49 | 0.158 |

| | | | | | | | |
|---|---|---|---|---|---|---|---|
| *) alkalischer Aufschluß | | | | | | | |

### Herstellung der silanhaltigen Polyvinylacetale:

### Beispiel 21:

In einem 6 Liter Glasreaktor wurden 1141 ml dest. Wasser, 526 ml 20 %-ige HC1 und 678 ml einer 16.3 %-igen wässrigen Lösung des Polyvinylalkohols aus Beispiel 11, Viskosität 6.33 mPas (DIN 53015; Methode nach Höppler; 4 %-ige wässrige Lösung) vorgelegt. Die Vorlage wurde unter Rühren innerhalb einer Stunde auf -2°C abgekühlt. Nun wurden in einem Zeitraum von 5 Minuten 90 ml Butyraldehyd, vorgekühlt auf -4°C, zugegeben. Die Reaktorinnentemperatur stieg dabei auf -1.0°C an, welche aber wieder innerhalb kürzester Zeit auf Fälltemperatur von -2°C gebracht wurde. Ca. 3 Minuten nach Zugabe des Butyraldehyds wurde der zunächst klare Ansatz milchig trüb, und bereits 5 Minuten später fiel das Produkt aus. Nach 40 Minuten Reaktionszeit bei -2°C wurde die Temperatur über einen Zeitraum von 3.5 Stunden auf 25°C erhöht und diese Temperatur für weitere 2 Stunden gehalten. Daraufhin wurde das Produkt filtriert und ca. 15 Minuten unter fließendem, destilliertem Wasser nachgewaschen. Anschließend wurde der Filterkuchen wieder in den Glasreaktor eingelegt und mit 4 Liter destilliertem Wasser resuspendiert. Der gemessene pH-Wert der Suspension lag bei 3.1. Die Suspension wurde nun mit 14 ml 10 %-iger Natronlauge alkalisch gestellt (pH-Wert 12.2) und ca. 15 Stunden bei Raumtemperatur gerührt. Anschließend wurde die Suspension auf 50°C aufgeheizt und weitere 4 Stunden gerührt. Nach dem Abkühlen auf Raumtemperatur wurde das Produkt wiederum abfiltriert und solange mit destilliertem Wasser gewaschen, bis das Filtrat neutral reagierte. Anschließend erfolgte die Trocknung bis zu einem Festgehalt von mindestens 98 %, zunächst bei 22°C, dann bei 35°C im Vakuum. Es wurde ein Silanhaltiges Polyvinylbutyral mit 16.0 Gew.-% Vinylalkohol-Einheiten, 1.5 Gew.-% Vinylacetat-Einheiten und 82.5 Gew.-% Vinylbutyral-Einheiten erhalten.

Die Viskosität einer 10 %-igen ethanolischen Lösung nach DIN 53015, Methode nach Höppler, lag bei 143.2 mPas. Si-Gehalt: 0.099 Gew.-% (alle Messungen mit alkalischem Aufschluß).

### Vergleichsbeispiel 22:

Wie Beispiel 21, jedoch mit 1600 ml dest. Wasser, 744 ml 20 %-ige HCl, 127 ml Butyraldehyd und 970 ml einer 16.1 %-igen wässrigen Lösung des Polyvinylalkohols aus Vergleichsbeispiel 12, Viskosität 5.28 mPas (DIN 5015; Methode nach Höppler; 4 %-ige wässrige Lösung). Der pH-Wert nach dem Resuspendieren betrug 3.3. Die Suspension wurde mit 20 ml 10 %-iger Natronlauge alkalisch gestellt (pH-Wert 12.3) und ebenfalls 15 Stunden bei Raumtemperatur und 4 Stunden bei 50°C gerührt.
Es wurde ein modifiziertes Polyvinylbutyral mit 17.4 Gew.-% Vinylalkohol-Einheiten, 1.3 Gew.-% Vinylacetat-Einheiten und 81.3 Gew.-% Vinylbutyral-Einheiten erhalten.
Die Viskosität (DIN 53015; Methode nach Höppler; 10 %-ige ethanolische Lösung) betrug 97.2 mPas. Si-Gehalt: 0.093 Gew.-%.
Die 10 %-ige ethanolische Lösung war gelb.

### Beispiel 23:

In einem 6 Liter Glasreaktor wurden 1400 ml dest. Wasser, 492 ml 20 %-ige HCl und 954 ml einer 17.0 %-igen wässrigen Lösung des Polyvinylalkohols aus Beispiel 13 - Viskosität 2.68 mPas (DIN 53015; Methode nach Höppler; 4 %-ige wässrige Lösung)-vorgelegt. Die Vorlage wurde unter Rühren innerhalb 45 Minuten auf 5°C abgekühlt. Innerhalb eines Zeitraumes von 5 Minuten wurden 60 ml Acetaldehyd, vorgekühlt auf -4°C, zugegeben. Etwa 15 Minuten nach der Acetaldehydzugabe trübte sich die bis dahin klare Lösung leicht ein. 20 Minuten nach Zugabe des Acetaldehyds wurden im gleichen Zeitraum von 5 Minuten 76 ml, auf -4°C vorgekühltes, Butyraldehyd eingebracht. Die Reaktorinnentemperatur stieg dabei auf 6.8°C an. Binnen kürzester Zeit wurde wieder auf 5°C abgekühlt. Zirka 5 Minuten nach der Butyraldehydzugabe fiel das Produkt aus. Nach 40 Minuten Reaktionszeit bei 5°C wurde die Temperatur über einen Zeitraum von 3.5 Stunden auf 25°C erhöht und diese Temperatur für weitere 2 Stunden gehalten. Daraufhin wurde das Produkt filtriert und ca. 15 Minuten unter fließendem, destilliertem Wasser nachgewaschen. Anschließend wurde der Filterkuchen wieder in den Glasreaktor eingelegt und mit 4 Liter destilliertem Wasser resuspendiert. Der gemessene pH-Wert der Suspension zeigte 3.1. Die Suspension wurde nun mit 18 ml 10 %-iger Natronlauge alkalisch gestellt (pH-Wert 12.2) und ca. 15 Std. bei Raumtemperatur gerührt. Anschließend wurde die Suspension auf 40°C aufgeheizt und weitere 4 Stunden gerührt. Nach dem Abkühlen auf Raumtemperatur wurde das Produkt wiederum abfiltriert und solange mit destilliertem Wasser gewaschen, bis das Filtrat neutral reagierte. Anschließend erfolgte die Trocknung bis zu einem Festgehalt von mindestens 98 %, zunächst bei 22°C, dann bei 35°C im Vakuum.
Es wurde ein modifiziertes Polyvinylacetal mit 15.6 Gew.-% Vinylalkohol-Einheiten, 1.1 Gew.-% Vinylacetat-Einheiten und 83.3 Gew.-% Vinylacetal-Einheiten erhalten. Die Viskosität (DIN 53015; Methode nach Höppler; 10 %-ige ethanolische Lösung) betrug 27.8 mPas. Der Si-Gehalt wurde zu 0.149 Gew.-% ermittelt.

### Vergleichsbeispiel 24:

Wie Beispiel 23 jedoch mit 1520 ml dest. Wasser, 512 ml 20 %-ige HCl, 62 ml Acetaldehyd, 79 ml Butyraldehyd und 928 ml einer 18.1 %-igen wässrigen Lösung des Polyvinylalkohols aus Vergleichsbeispiel 14 - Viskosität 2.26 mPas (DIN 53015; Methode nach Höppler; 4 %-ige wässrige Lösung). Der pH-Wert nach dem Resuspendieren betrug 3.4. Die Suspension wurde mit 19 ml 10 %-iger Natronlauge alkalisch gestellt (pH-Wert 12.4) und ebenfalls 15 Stunden bei Raumtemperatur und 4 Stunden bei 40°C gerührt.
Es wurde ein modifiziertes Polyvinylacetal mit 15.6 Gew.-% Vinylalkohol-Einheiten, 1.3 Gew.-% Vinylacetat-Einheiten und 83.1 Gew.-% Vinylacetal-Einheiten erhalten. Die Viskosität (DIN 53015; Methode nach Höppler; 10 %-ige ethanolische Lösung) betrug 27.1 mPas. Der Si-Gehalt wurde zu 0.157 Gew.-% ermittelt. Die 10 %-ige ethanolische Lösung war leicht gelb.

### Beispiel 25:

Wie Beispiel 21 jedoch mit 1450 ml dest. Wasser, 760 ml 20 %-ige HCl, 129 ml Butyraldehyd und 1216 ml einer 14.0 %-igen wässrigen Lösung des Polyvinylalkohols aus Beispiel 15, Viskosität 2.73 mPas (DIN 53015; Methode nach Höppler; 4 %-ige wässrige Lösung). Der pH-Wert nach dem Resuspendieren betrug 3.6. Die Suspension wurde mit 20 ml 10 %-iger Natronlauge alkalisch gestellt (pH-Wert 12.2) und ebenfalls 15 Stunden bei Raumtemperatur und 4 Stunden bei 40°C gerührt.
Es wurde ein modifiziertes Polyvinylbutyral mit 17.2 Gew.-% Vinylalkohol-Einheiten, 1.4 Gew.-% Vinylacetat-Einheiten und 81.4 Gew.-% Vinylbutyral-Einheiten erhalten. Die Viskosität (DIN 53015; Methode nach Höppler; 10 %-ige ethanolische Lösung) betrug 112.2 mPas. Si-Gehalt: 0.193 Gew.-%.

### Vergleichsbeispiel 26:

Wie Beispiel 21 jedoch mit 1280 ml dest. Wasser, 750 ml 20 %-ige HCl, 128 ml Butyraldehyd und 1400 ml einer 12.0 %-igen wässrigen Lösung des Polyvinylalkohols aus Vergleichsbeispiel 16, Viskosität 2.57 mPas (DIN 53015; Methode nach Höppler; 4 %-ige wässrige Lösung). Die Fälltemperatur lag bei -4°C. Der pH-Wert nach dem Resuspendieren betrug 3.6. Die Suspension wurde mit 20 ml 10 %-iger Natronlauge alkalisch gestellt (pH-Wert 12.2) und ebenfalls 15 Std. bei Raumtemperatur und 4 Std. bei 40°C gerührt.
Es wurde ein modifiziertes Polyvinylbutyral mit 17.6 Gew.-% Vinylalkohol-Einheiten, 1.3 Gew.-% Vinylacetat-Einheiten und 81.1 Gew.-% Vinylbutyral-Einheiten erhalten.
Die Viskosität (DIN 53015; Methode nach Höppler; 10 %-ige ethanolische Lösung) betrug 26.3 mPas. Si-Gehalt: 0.136 Gew.-%.
Die 10 %-ige ethanolische Lösung war stark gelb.

### Beispiel 27:

Wie Beispiel 21 jedoch mit 1580 ml dest. Wasser, 780 ml 20 %-ige HCl, 133 ml Butyraldehyd und 1170 ml einer 14.9 %-igen wässrigen Lösung des Polyvinylalkohols aus Beispiel 17, Viskosität 2.37 mPas (DIN 53015; Methode nach Höppler; 4 %-ige wässrige Lösung). Die Fälltemperatur lag bei -4°C. Der pH-Wert nach dem Resuspendieren betrug 3.3. Die Suspension wurde mit 21 ml 10 %-iger Natronlauge alkalisch gestellt (pH-Wert 12.2) und ebenfalls 15 Std. bei Raumtemperatur und 4 Std. bei 40°C gerührt.
Es wurde ein modifiziertes Polyvinylbutyral mit 17.1 Gew.-% Vinylalkohol-Einheiten, 1.5 Gew.-% Vinylacetat-Einheiten und 81.4 Gew.-% Vinylbutyral-Einheiten erhalten.
Die Viskosität (DIN 53015; Methode nach Höppler; 10 %-ige ethanolische Lösung) betrug 23.4 mPas. Si-Gehalt: 0.189 Gew.-%.

### Vergleichsbeispiel 28:

Wie Beispiel 21 jedoch mit 1500 ml dest. Wasser, 750 ml 20 %-ige HCl, 128 ml Butyraldehyd und 1170 ml einer 14.4 %-igen wässrigen Lösung des Polyvinylalkohols aus Vergleichsbeispiel 18, Viskosität 2.21 mPas (DIN 53015; Methode nach Höppler; 4 %-ige wässrige Lösung). Die Fälltemperatur lag bei -5°C. Der pH-Wert nach dem Resuspendieren betrug 3.6. Die Suspension wurde mit 20 ml 10 %-iger Natronlauge alkalisch gestellt (pH-Wert 12.2) und ebenfalls 15 Std. bei Raumtemperatur und 4 Std. bei 35°C gerührt.
Es wurde ein modifiziertes Polyvinylbutyral mit 17.5 Gew.-% Vinylalkohol-Einheiten, 1.5 Gew.-% Vinylacetat-Einheiten und 81.0 Gew.-% Vinylbutyral-Einheiten erhalten.
Die Viskosität (DIN 53015; Methode nach Höppler; 10 %-ige ethanolische Lösung) betrug 20.6 mPas. Si-Gehalt: 0.122 Gew.-%.
Die 10 %-ige ethanolische Lösung war gelb.

### Beispiel 29:

Wie Beispiel 21 jedoch mit 1600 ml dest. Wasser, 770 ml 20 %-ige HCl, 125 ml Butyraldehyd und 1140 ml einer 15.3 %-igen wässrigen Lösung des Polyvinylalkohols aus Beispiel 19, Viskosität 2.51 mPas (DIN 53015; Methode nach Höppler; 4 %-ige wässrige Lösung). Die Fälltemperatur lag bei -4°C. Der pH-Wert nach dem Resuspendieren betrug 3.3. Die Suspension wurde mit 21 ml 10 %-iger Natronlauge alkalisch gestellt (pH-Wert 12.3) und ebenfalls 15 Std. bei Raumtemperatur und 4 Std. bei 40°C gerührt.
Es wurde ein modifiziertes Polyvinylbutyral mit 18.2 Gew.-% Vinylalkohol-Einheiten, 1.4 Gew.-% Vinylacetat-Einheiten und 80.4 Gew.-% Vinylbutyral-Einheiten erhalten.
Die Viskosität (DIN 53015; Methode nach Höppler; 10 %-ige ethanolische Lösung) betrug 25.9 mPas. Si-Gehalt: 0.094 Gew.-%.

### Beispiel 30:

Wie Beispiel 21 jedoch mit 1700 ml dest. Wasser, 800 ml 20 %-ige HCl, 120 ml Butyraldehyd und 990 ml einer 17.2 %-igen wässrigen Lösung des Polyvinylalkohols aus Beispiel 20, Viskosität 2.49 mPas (DIN 53015; Methode nach Höppler; 4 %-ige wässrige Lösung). Die Fälltemperatur lag bei -4°C. Der pH-Wert nach dem Resuspendieren betrug 3.3. Die Suspension wurde mit 22 ml 10 %-iger Natronlauge alkalisch gestellt (pH-Wert 12.4) und ebenfalls 15 Std. bei Raumtemperatur und 4 Std. bei 40°C gerührt. Es wurde ein modifiziertes Polyvinylbutyral mit 18.6 Gew.-% Vinylalkohol-Einheiten, 1.3 Gew.-% Vinylacetat-Einheiten und 80.1 Gew.-% Vinylbutyral-Einheiten erhalten.
Die Viskosität (DIN 53015; Methode nach Höppler; 10 %-ige ethanolische Lösung) betrug 25.1 mPas. Si-Gehalt: 0.101 Gew.-%.

### Bestimmungsmethoden:

### 1. Bestimmung der dynamischen Viskosität einer Lösung von Polyvinylacetalen (Lösungsviskosität):

90.00 ± 0.01 g Ethanol und 10.00 ± 0.01 g Polyvinylacetal wurden in einem 250 ml Erlenmeyerkolben mit Schliffstopfen eingewogen und bei 50°C in der Schüttelmaschine vollständig aufgelöst. Anschließend wurde auf 20°C abgekühlt und die dynamische Viskosität (DIN 53 015; Methode nach Höppler) bei 20°C mit einer geeigneten Kugel, z.B. der Kugel 3, bestimmt.

### 2. Bestimmung des Vinylalkohol-Gehalts:

Der Gehalt an Vinylalkohol-Gruppen in den Polyvinylacetalen wurde durch die Acetylierung der Hydroxylgruppen mit Essigsäureanhydrid in Gegenwart von Pyridin und 4-Dimethylaminopyridin ermittelt.
Dazu wurden 1 g ± 0.001 g Polyvinylacetal in 24 ml Pyridin und 0.04 g 4-Dimethylaminopyridin bei 50°C innerhalb von 2 Stunden gelöst. Die auf 25°C abgekühlte Lösung wurde mit 10 ml einer Mischung aus Pyridin und Essigsäureanhydrid (87/13 Volumenteile) versetzt und 1 Stunde intensiv durchmischt. Daraufhin wurden 30 ml einer Mischung aus Pyridin/Wasser (5/1 Volumenteile) zugesetzt und eine weitere Stunde geschüttelt. Anschließend wurde mit methanolischer 0.5 N KOH auf pH 7 titriert.

### Berechnung :

Gew.-% Vinylalkohol = [(100 x M_{W})/2000] x (ml Blindwert - ml Probe). Mit Mw = Mittleres Molekulargewicht pro Repetiereinheit des Polymeren.

### 3. Bestimmung der Viskosität der Polyvinylalkohol-Lösungen:

Die Bestimmung der Viskosität der als Edukte eingesetzten teil- oder vollverseiften silanisierten Polyvinylester-Festharze erfolgte analog zur Bestimmung der dynamischen Viskosität der Polyvinylacetale; es wurden nur 4 %-ige wässrige Lösungen eingesetzt.

## Patentansprüche

1. Silan-haltige Polyvinylalkohole und Polyvinylacetale erhältlich mittels
a) radikalischer Polymerisation von einem oder mehreren Vinylestern von unverzweigten oder verzweigten Alkylcarbonsäuren mit 1 bis 18 C-Atomen in Gegenwart von silanhaltigen Aldehyden oder deren Halbacetale oder Vollacetale,
b) Verseifung der damit erhaltenen Vinylesterpolymerisate, und gegebenenfalls
c) Acetalisierung der teilverseiften oder vollverseiften Vinylesterpolymerisate.

2. Silan-haltige Polyvinylalkohole und Polyvinylacetale gemäß Anspruch 1, wobei die silanhaltigen Aldehyden, deren Halbacetale und Vollacetale ausgewählt werden aus der Gruppe umfassend Verbindungen der Strukturformeln
I) R₃Si-[OSiR₂]_{y}-(CH₂)ₓ-CH=O,
II) R₃Si-[OSiR₂]_{y}-(CH₂)ₓ-CH(OR¹)₂,
III) R₃Si-[OSiR₂]_{y}-(CH₂)z-Ar-(CH₂)z-CH=O,
IV) R₃Si-[OSiR₂]_{y}-(CH₂)z-Ar-(CH₂)z-CH (OR¹)₂,
V) O=CH-(CH₂)ₓ-Si(R)₂-O-Si(R)₂-(CH₂)ₓ-CH=O,
VI) [SiO(R)-(CH₂)_{z}-CH=O]₃₋₄,
wobei R gleich oder verschieden ist und für Halogen; für einen unverzweigten oder verzweigten, gesättigten oder ungesättigten, gegebenenfalls substituierten Alkyl- oder Alkoxyrest mit 1 bis 12 C-Atomen; für einen Acylrest mit 2 bis 12 C-Atomen, wobei R gegebenenfalls durch Heteroatome aus der Gruppe umfassend N, O, S unterbrochen sein kann; für einen, gegebenenfalls substituierten, Aryl- oder Aryloxyrest mit 3 bis 20 C-Atomen, wobei der Aromat auch ein oder mehrere Heteroatome aus der Gruppe umfassend N, O, S enthalten kann, steht, und
R¹ die Bedeutung hat H, unverzweigter oder verzweigter, gesättigter oder ungesättigter, gegebenenfalls substituierter Alkylrest mit 1 bis 12 C-Atomen, der gegebenenfalls durch Heteroatome aus der Gruppe umfassend N, O, S unterbrochen sein kann, Ar für eine aromatische Gruppe steht, welche gegebenenfalls ein oder mehrere Heteroatome aus der Gruppe umfassend N, O, S enthalten, und
x = 2 bis 40, y = 0 bis 100, z = 0 bis 20.

3. Silan-haltige Polymerisate nach Anspruch 1 bis 2, **dadurch gekennzeichnet, dass** die silanhaltigen Aldehyde in einer Menge von 0.0001 bis 5.0 Gew.-%, bezogen auf das Gesamtgewicht der Monomere, eingesetzt werden.

4. Silan-haltige Polymerisate nach Anspruch 1 bis 3, **dadurch gekennzeichnet, dass** ethylenisch ungesättigte, silanhaltige Monomere copolymerisiert werden.

5. Verfahren zur Herstellung von Silan-haltigen Polyvinylalkoholen und Polyvinylacetalen mittels
a) radikalischer Polymerisation von einem oder mehreren Vinylestern von unverzweigten oder verzweigten Alkylcarbonsäuren mit 1 bis 18 C-Atomen in Gegenwart von silanhaltigen Aldehyden oder deren Halbacetäle oder Vollacetale,
b) Verseifung der damit erhaltenen Vinylesterpolymerisate, und gegebenenfalls
c) Acetalisierung der teilverseiften oder vollverseiften Vinylesterpolymerisate.

6. Verfahren nach Anspruch 5, **dadurch gekennzeichnet, dass** die radikalische Polymerisation mittels Substanzpolymerisation, Suspensionspolymerisation oder durch Polymerisation in organischen Lösungsmitteln durchgeführt wird.

7. Verfahren nach Anspruch 5 oder 6, **dadurch gekennzeichnet, dass** die Verseifung der Vinylester-Polymerisate im Alkalischen oder Sauren unter Zugabe von Säure oder Base erfolgt.

8. Verfahren nach Anspruch 5 bis 7, **dadurch gekennzeichnet, dass** zur Acetalisierung die teil- oder vollverseiften Vinylesterpolymerisate mit aliphatischen oder aromatischen Aldehyden, mit vorzugsweise 1 bis 15 C-Atomen, umgesetzt werden, welche gegebenenfalls mit einem oder mehreren Substituenten aus der Gruppe umfassend Hydroxy-, Carboxyl- und Sulfonat-, Ammonium-, Aldehyd-Rest substituiert sein können.

9. Verfahren nach Anspruch 5 bis 8, **dadurch gekennzeichnet, dass** bei der Polymerisation zusätzlich weitere Regler auf Basis von silanhaltigen Verbindungen oder von Aldehyden eingesetzt werden.

10. Verwendung der Silan-haltigen Polyvinylacetale aus Anspruch 1 bis 4 als Bindemittel für Druckfarben, und in Form deren Folien für Verbundsicherheitsglas und Glasverbunde, Hochsicherheitsglas oder Scheibenfolien.

11. Verwendung der Silan-haltigen Polyvinylacetale aus Anspruch 1 bis 4 als Schutzkolloid für wässrige Dispersionen und bei der Polymerisation in wässrigem Medium, und bei der Herstellung von in Wasser redispergierbaren Dispersionspulvern.

12. Verwendung der Silan-haltigen Polyvinylacetale aus Anspruch 1 bis 4 als Bindemittel in Lacken auf wässriger Basis, in Pulverlacken, in Korrosionsschutzmitteln, in der Keramikindustrie, für Keramikpulver und Metallpulver im Spritzguß (powder injection molding) und als Bindemittel für die Innenbeschichtung von Dosen.

13. Verwendung der Silan-haltigen Polyvinylakohole aus Anspruch 1 bis 4 als Schutzkolloide bei der Polymerisation, als Bindemittel für Papierstreichmassen, sowie als Bindemittel für Baustoffe, Keramik und Holz.

## Claims

1. Silane-containing polyvinyl alcohols or polyvinyl acetals, obtainable by means of
a) free-radical polymerization of one or more vinyl esters of unbranched or branched alkylcarboxylic acids having from 1 to 18 carbon atoms in the presence of silane-containing aldehydes or hemiacetals or full acetals thereof,
b) hydrolysis of the thus obtained vinyl ester polymers, and optionally
c) acetalization of the partly hydrolysed or fully hydrolysed vinyl ester polymers.

2. Silane-containing polyvinyl alcohols or polyvinyl acetals according to Claim 1, wherein the silane-containing aldehydes and the hemiacetals and full acetals thereof are selected from the group consisting of compounds of the structural formulae
I) R₃Si-[OSiR₂]_{y}-(CH₂)ₓ-CH=O,
II) R₃Si-[OSiR₂]_{y}-(CH₂)ₓ-CH(OR¹)₂,
III) R₃Si-[OSiR₂]_{y}-(CH₂)_{z}-Ar-(CH₂)_{z}-CH=O,
IV) R₃Si-[OSiR₂]_{y}-(CH₂)_{z}-Ar-(CH₂)_{z}-CH(OR¹)₂,
V) O=CH-(CH₂)ₓ-Si(R)₂-O-Si(R)₂-(CH₂)ₓ-CH=O,
VI) [SiO(R) - (CH₂)_{z}-CH=O]₃₋₄,
where R is the same or different and is halogen; is an unbranched or branched, saturated or unsaturated, optionally substituted alkyl or alkoxy radical having from 1 to 12 carbon atoms; is an acyl radical having from 2 to 12 carbon atoms, where R may optionally be interrupted by heteroatoms from the group consisting of N, O, S; is an optionally substituted aryl or aryloxy radical having 3 to 20 carbon atoms, where the aromatic may also contain one or more heteroatoms from the group consisting of N, O, S, and
R¹ is H, unbranched or branched, saturated or unsaturated, optionally substituted alkyl radical having from 1 to 12 carbon atoms which may optionally be interrupted by heteroatoms from the group' consisting of N, O, S; Ar is an aromatic group which may optionally contain one or more heteroatoms from the group consisting of N, O, S, and
x = from 2 to 40, y = from 0 to 100, z = 0 to 20.

3. Silane-containing polymers according to Claim 1 and 2, **characterized in that** the silane-containing aldehydes are used in an amount of from 0.0001 to 5.0% by weight, based on the total weight of the monomers.

4. Silane-containing polymers according to Claim 1 to 3, **characterized in that** ethylenically unsaturated, silane-containing monomers are copolymerized.

5. Process for preparing silane-containing polyvinyl alcohols and polyvinyl acetals by means of
a) free-radical polymerization of one or more vinyl esters of unbranched or branched alkylcarboxylic acids having from 1 to 18 carbon atoms in the presence of silane-containing aldehydes or hemiacetals or full acetals thereof,
b) hydrolysis of the thus obtained vinyl ester polymers, and optionally
c) acetalization of the partly hydrolysed or fully hydrolysed vinyl ester polymers.

6. Process according to Claim 5, **characterized in that** the free-radical polymerization is carried out by means of bulk polymerization, suspension polymerization or by polymerization in organic solvents.

7. Process according to Claim 5 or 6, **characterized in that** the hydrolysis of the vinyl ester polymers is effected in alkaline or acidic media with the addition of acid or base.

8. Process according to Claim 5 to 7, **characterized in that** acetalization is effected by reacting the partly or fully hydrolysed vinyl ester polymers with aliphatic or aromatic aldehydes having preferably from 1 to 15 carbon atoms which may optionally be substituted by one or more substituents from the group consisting of hydroxyl, carboxyl and sulphonate, ammonium, aldehyde radicals.

9. Process according to Claim 5 to 8, **characterized in that** further regulators based on silane-containing compounds or on aldehydes are additionally used in the polymerization.

10. Use of the silane-containing polyvinyl acetals from Claim 1 to 4 as binders for printing inks, and in the form of films thereof for laminated safety glass and glass laminates, high-performance safety glass or glazing films.

11. Use of the silane-containing polyvinyl acetals from Claim 1 to 4 as a protective colloid for aqueous dispersions and in polymerization in an aqueous medium, and in the preparation of dispersion powders redispersible in water.

12. Use of the silane-containing polyvinyl acetals from Claim 1 to 4 as binders in water-based coatings, in powder coatings, in corrosion protectants, in the ceramics industry, for ceramic powders and metal powders in power injection moulding and as binders for the interior coating of cans.

13. Use of the silane-containing polyvinyl alcohols from Claim 1 to 4 as protective colloids in polymerization, as binders for paper coating slips, and as binders for building materials, ceramics and wood.

## Revendications

1. Poly(alcool vinylique)s et polyvinylacétals silanés pouvant être obtenus par
a) polymérisation radicalaire d'un ou plusieurs esters vinyliques d'acides alkylcarboxyliques ramifiés ou non ramifiés ayant de 1 à 18 atomes de carbone, en présence d'aldéhydes silanés ou de leurs hémi-acétals ou holo-acétals,
b) saponification des polymères d'esters vinyliques ainsi obtenus et éventuellement
c) acétalisation des polymères d'esters vinyliques partiellement saponifiés ou totalement saponifiés.

2. Poly(alcool vinylique)s et polyvinylacétals silanés selon la revendication 1, dans lesquels les aldéhydes silanés, leurs hémi-acétals et holo-acétals sont choisis dans le groupe comprenant des composés de formules développées
I) R₃Si-[OSiR₂]_{y}-(CH₂)ₓ-CH=O,
II) R₃Si-[OSiR₂]_{y}-(CH₂)ₓ-CH(OR¹)₂,
III) R₃Si-[OSiR₂]_{y}-(CH₂)_{z}-Ar-(CH₂)_{z}-CH=O,
IV) R₃Si-[OSiR₂]_{y}-(CH₂)_{z}-Ar-(CH₂)_{z}-CH(OR¹)₂.
V) O=CH-(CH₂)ₓ-Si(R)₂-O-Si(R)₂-(CH₂)ₓ-CH=O,
VI) [SiO(R)-(CH₂)_{z}-CH=O]₃₋₄,
R étant identique ou différent et représentant un atome d'halogène ; un radical alkyle ou alcoxy ramifié ou non ramifié, saturé ou insaturé, éventuellement substitué, ayant de 1 à 12 atomes de carbone ; un radical acyle ayant de 2 à 12 atomes de carbone, R pouvant éventuellement être interrompu par des hétéroatomes choisis dans l'ensemble comprenant N, O, S ; un radical aryle ou aryloxy éventuellement substitué ayant de 3 à 20 atomes de carbone, le radical aromatique pouvant également contenir un ou plusieurs hétéroatomes choisis dans l'ensemble comprenant N, O, S, et
R' représente H, un radical alkyle ramifié ou non ramifié, saturé ou insaturé, éventuellement substitué, ayant de 1 à 12 atomes de carbone, qui peut éventuellement être interrompu par des hétéroatomes choisis dans l'ensemble comprenant N, O, S ;
Ar représente un groupe aromatique qui peut éventuellement contenir un ou plusieurs hétéroatomes choisis dans l'ensemble comprenant N, O, S, et
x = 2 à 40, y = 0 à 100, z = 0 à 20.

3. Polymères silanés selon la revendication 1 ou 2, **caractérisés en ce que** les aldéhydes silanés sont utilisés en une quantité de 0,0001 à 5,0 % en poids, par rapport au poids total des monomères.

4. Polymères silanés selon l'une quelconque des revendications 1 à 3, **caractérisés en ce que** des monomères silanés à insaturation éthylénique sont copolymérisés.

5. Procédé pour la préparation de poly(alcool vinylique)s et polyvinylacétals silanés, par
a) polymérisation radicalaire d'un ou plusieurs esters vinyliques d'acides alkylcarboxyliques ramifiés ou non ramifiés ayant de 1 à 18 atomes de carbone, en présence d'aldéhydes silanés ou de leurs hémi-acétals ou holo-acétals,
b) saponification des polymères d'esters vinyliques ainsi obtenus et éventuellement
c) acétalisation des polymères d'esters vinyliques partiellement saponifiés ou totalement saponifiés.

6. Procédé selon la revendication 5, **caractérisé en ce que** la polymérisation radicalaire est effectuée par polymérisation en masse, polymérisation en suspension ou par polymérisation dans des solvants organiques.

7. Procédé selon la revendication 5 ou 6, **caractérisé en ce que** la saponification des polymères d'esters vinyliques s'effectue en milieu alcalin ou acide, avec addition d'acide ou de base.

8. Procédé selon l'une quelconque des revendications 5 à 7, **caractérisé en ce que** dans l'acétalisation on fait réagir les polymères d'esters vinyliques, partiellement ou totalement saponifiés, avec des aldéhydes aliphatiques ou aromatiques ayant de préférence de 1 à 15 atomes de carbone, qui peuvent éventuellement porter un ou plusieurs substituants choisis dans l'ensemble comprenant des radicaux hydroxy, carboxy et sulfonate, ammonium, aldéhyde.

9. Procédé selon l'une quelconque des revendications 5 à 8, **caractérisé en ce que** dans la polymérisation on utilise additionnellement d'autres régulateurs à base de composés silanés ou d'aldéhydes.

10. Utilisation des polyvinylacétals silanés de l'une quelconque des revendications 1 à 4, en tant que liant pour encres d'imprimerie et sous forme de leurs films pour verre feuilleté de sécurité et composites comportant du verre, verre de haute sécurité ou films pour vitres.

11. Utilisation des polyvinylacétals silanés de l'une quelconque des revendications 1 à 4, en tant que colloïde protecteur pour dispersions aqueuses et dans la polymérisation en milieu aqueux, et dans la préparation de poudres de dispersions redispersables dans l'eau.

12. Utilisation des polyvinylacétals silanés de l'une quelconque des revendications 1 à 4, en tant que liants dans des peintures à base aqueuse, dans des peintures en poudre, dans des produits anticorrosion, dans l'industrie céramique, pour des poudres de céramique et des poudres métalliques dans le moulage par injection (powder injection molding) et en tant que liants pour le revêtement interne de boîtes de conserve.

13. Utilisation des poly(alcool vinylique)s silanés de l'une quelconque des revendications 1 à 4, en tant que colloïdes protecteurs dans la polymérisation, en tant que liants pour des sauces de couchage de papier, ainsi qu'en tant que liants pour des matériaux de construction, la céramique et le bois.
